# EUROPEAN PATENT SPECIFICATION

(11) **EP 3 939 199 B1**
(45) Date of publication and mention of the grant of the patent: **27.08.2025**
(21) Application number: 20709227.1
(22) Date of filing: 12.03.2020
(51) Int. Cl.: H04L 9/00, H04L 9/32, H04L 9/08, G06F 21/14

(54) **METHOD FOR PROVISIONING WHITE-BOX ASSETS AND CORRESPONDING DEVICE, SERVER AND SYSTEM**
VERFAHREN ZUR BEREITSTELLUNG VON WHITEBOX-ASSETS UND ZUGEHÖRIGE VORRICHTUNG, SERVER UND SYSTEM
PROCÉDÉ D'APPROVISIONNEMENT D'ACTIFS DE BOÎTE BLANCHE ET DISPOSITIF, SERVEUR ET SYSTÈME CORRESPONDANTS

(30) Priority: 14.03.2019 EP 19305308
(43) Date of publication of application: 19.01.2022
(73) Proprietor: Thales Dis France SAS, 92190 Meudon (FR)
(72) Inventor: DELHOSTE, Fabrice, 13881 GEMENOS Cedex (FR); JELJELI, Hamza, 13881 GEMENOS Cedex (FR); ROUBINET, Gregory, 13881 GEMENOS Cedex (FR)
(74) Representative: Lotaut, Yacine Diaw
(86) International application number: PCT/EP2020/056692
(87) International publication number: WO 2020/182956

(56) References cited:
- WO-A1-2019/028547
- US-A1- 2012 246 487

## Description

### Field of the invention:

The invention relates generally to a method for provisioning a first or second device with white-box assets.

The present invention is notably applicable to a mobile radio-communication field in which the device includes a mobile terminal, like e.g., a (mobile) (tele)phone(s).

Moreover, the invention also pertains to a server for provisioning a first or second device with white-box assets.

Finally, the invention concerns a system for provisioning a first or second device with white-box assets as well. The system includes one or several devices, a first server and one or several second servers.

### State of the art:

As known per se, the White-Box Cryptography (or WBC) is an essential technique in SoftWare (or SW) protection to keep cryptographic assets, such as a cryptographic key, secure, i.e. secret. The WBC technique uses, instead of the cryptographic assets, White-Box (or WB) assets to carry out one or several cryptographic operations, so as not to reveal at least a part of the cryptographic assets. The WB assets include a secret cryptographic key, as a WB key, and associated data, as WB data. Such a WBC technique allows performing one or several cryptographic operations in an environment that is subject to attacks without revealing any portion of secret information, such as a secret cryptographic key. The WBC technique allows ensuring the confidentiality of cryptographic assets, such as a cryptographic key, when a cryptographic computation or operation is performed on a non-trusted device, such a phone. Under the WB model, the cryptographic operation does not use the cryptographic assets but the WB assets. The WB key is related to the cryptographic key while being distinct from the cryptographic key. The WB assets are generated at least in part from the cryptographic assets, in such a way that an attacker who retrieves the WB assets is not able to retrieve the corresponding cryptographic key.

WO 2019/028547 A1 discloses a deployment technique based on a diversification at a binary level, so as to deploy and execute a secure machine executable code, as an application that uses the same WB assets for all the users.

When the WBC implementation of a cryptographic algorithm is to be integrated into an application or a Software Development Kit (or SDK) supported by a phone, there is a need of a solution that allows provisioning a device, in a secure and efficient manner, with corresponding WB assets.

### Summary of the invention:

The invention proposes a solution for satisfying the just herein above specified need by providing a method for provisioning a first or second device with white-box assets.

According to the invention, the white-box assets include a white-box key and associated white-box data. The method comprises:
- a) sending, by the first device, to a first server, through a first channel, a key payload request for getting a key payload relating to the white-box key;
- b) retrieving, by the first server, the white-box key payload and a unique identifier, the unique identifier being associated with a corresponding data payload relating to the white-box data;
- c) sending, by the first server, to the first device, through the first channel, as a key payload request response, the unique identifier and the white-box key payload;
- d) storing, by the first or second device, the unique identifier and the white-box key payload, the second device being coupled or connected to the first device;
- e) sending, by the first device, to a second server, through a second channel, a data payload request for getting a data payload relating to white-box data, the white-box data payload being associated with the white-box key payload, the white-box data payload request including or being accompanied with the unique identifier;
- f) sending, by the second server, to the first server, a seed request for getting at least one seed, the seed request including or being accompanied with the unique identifier;
- g) retrieving, by the first server, based on the unique identifier, the at least one seed;
- h) sending, by the first server, to the second server, as a seed request response, the at least one seed;
- i) generating, by the second server, on the fly, by using the at least one seed, the white-box data payload;
- j) sending, by the second server, to the first device, through the second channel, as a data payload request response, the white-box data payload; and
- k) storing, by the first or second device, the white-box data payload.

The principle of the invention consists in requesting, from a first device, via a first channel, to a first server, a payload relating to a White-Box Key (or WBK), sending back, through the first channel, the WBK payload and a Unique IDentifier (or UID) that is linked to a payload relating to White-Box Data (or WBD) associated with the WBK. Then, the first device requests, via a second channel, to a second server, the WBD payload along with the UID, as an identifier for correlating the loaded WBK payload with the WBD payload to be loaded. The second server requests, to the first server, one, two or more seeds along with the UID. The first server gets, based on the UID, and sends, to the second server, the corresponding seed(s). The second server generates, on the fly, based on the (received) seed(s), and sends, via the second channel, the WBD payload to the (requesting) first device. The first device and/or a second device cooperating with the first device record(s) the firstly received WBK payload and the secondly received associated WBD payload.

Thus, a WB application (and/or a SDK) that is(are) comprised in (or supported by) the first and/or second device(s) is/are able to access a (provisioned) WBK payload and the associated (provisioned) WBD payload.

It is to be noted that the WBK payload and the associated WBD payload are to be used by the WB application (and/or the SDK) only together, i.e. always in an associated manner. In other words, the WBK payload or the WBD payload is not exploitable or usable alone by the WB application (and/or the SDK).

The data that allows an association between a WBK payload and the corresponding WBD payload to be loaded at the requesting device is a UID, as a correlation ID. Once the requesting device has received, from a first server, a WBK payload, the correlation ID allows issuing, by a second server that has received the correlation ID from the first device, on-demand from the requesting device, an associated WBD payload.

The associated WBD payload is only generated and loaded to the requesting device at the time the WB application is connected to the provisioning servers, i.e. not before (not during an enrolment time by e.g., a bank or a service provider).

The WB assets have to be generated at the back-end side and then provisioned to a requesting client device side.

It is noteworthy that the WB assets, namely a WBK and the associated WBD, are generated by using two separate entities, namely at a first server side for a corresponding WBK payload and at a second server side for a corresponding WBD payload.

The first server may be connected to either an Hardware Security Module (or HSM) or a Software Security Module (or SSM) type entity that generates only the WBK payload preferably in an anticipated manner with respect to a need from a requesting device(s) to get the WB assets. The implementation at the HSM or SSM type entity side is therefore easy since the HSM or SSM type entity generates only the WBK payload (and not the WBD payload). Thus, the need of the generation operation by the HSM or SSM type entity is limited, minimum and efficient by reducing its involvement only to the WBK payload generation operation for a fleet of (target) devices. The WBK payload is sensitive in terms of its data content. The WBK payload has a data size that is less than a data size relating to the WBD payload.

Once the WBK payload is generated, the first server sends, through a first channel, to the requesting device, the WBK payload along with a UID.

The second server generates, on-demand and separately from the WBK payload generation, a corresponding WBD payload. The second server has only to store, in an ephemeral manner, the (generated) WBD payload up to a sending of the WBD payload to the requesting device.

Thus, the ephemeral storage need relating to the WBD payload represents a secure solution, since the ephemeral storage is only valid for one requesting device and lasts a very limited time, e.g. up to a few ms. There is therefore no exposition of any WBD payload for any non-provisioned device.

Thus, the WBD payload does not need to be protected by being stored in e.g., an HSM and/or an SSM type entity(ies), irrespective of whether the WBD payload is or is not sent to a client device. The memory footprint is therefore limited, minimum and efficient at the second server side.

Once the WBD payload is generated, the second server sends, through a second channel, to the requesting device, the WBD payload. Only the WBD payload that is requested by a requesting client device is thus issued.

The second channel is separate from the first channel.

Such a use of two separate channels to separately convey, through the first channel, the WBK payload and, through the second channel, the associated WBD payload allows securing their provisioning.

The invention solution is simple and efficient to generate and provision separately a WBK payload and the associated WBD payload.

The invention solution is secure since two separate channels have to be used to be provisioned at the client device side with the WBK payload and the associated WBD payload.

The invention solution is also secure since the first device has to provide a second server with a UID, as a correlation ID, to be received, from a first server along with a requested WBK payload, so as to be provisioned, by the second server, with associated requested WBD payload.

According to an additional aspect, the invention is a first device for being provisioned with white-box assets.

According to the invention, the white-box assets include a white-box key and associated white-box data. The first device is configured to:
- send, to a first server, through a first channel, a key payload request for getting a key payload relating to a white-box key;
- receive, from the first server, through the first channel, as a key payload request response, the unique identifier and the white-box key payload;
- store the unique identifier and the white-box key payload;
- send, to a second server, through a second channel, a data payload request for getting a data payload relating to the white-box data, the data payload request including or being accompanied with the unique identifier;
- receive, from the second server, through the second channel, as a data payload request response, the white-box data payload; and
- store the white-box data payload.

The first device may include a terminal, like e.g., a (mobile) phone, a tablet or a Personal Computer (or PC), a chip, a Secure Element (or SE) and/or any kind of communicating and computing device.

Within the present description, an SE is a smart object that includes a chip(s) that protect(s), as a tamper resistant component(s), access to stored data and that is intended to communicate data with an external device(s), like e.g., an SE host device, such as a mobile phone, and/or a local and/or remote server(s).

According to a further aspect, the invention is a second server for provisioning a first or second device with white-box assets.

According to the invention, the white-box assets include a white-box key and associated white-box data. The second server is configured to:
- receive, from the first device, through a channel, a data payload request for getting a data payload relating to white-box data, the white-box data payload being associated with a key payload relating to the white-box key, the data payload request including or being accompanied with a unique identifier;
- send, to another server, a request for getting at least one seed, the seed request including or being accompanied with the unique identifier;
- receive, from the other server, as a seed request response, the at least one seed;
- generate, on the fly, by using the at least one seed, the white-box data payload; and
- send, to the first device, through the channel, as a data payload request response, the white-box data payload.

According to still a further aspect, the invention is a system for provisioning a first or second device with white-box assets.

According to the invention, the white-box assets include a white-box key and associated white-box data. The system comprises at least the first device, a first server and at least one second server. The first device is configured to send, to the first server, through a first channel, a key payload request for getting a key payload relating to a white-box key. The first server is configured to:
- retrieve the white-box key payload and a unique identifier, the unique identifier being associated with a corresponding payload relating to the white-box data;
- send, to the first device, through the first channel, as a key payload request response, the unique identifier and the white-box key payload.

The first device is configured to:
- store or let store, by the second device, the unique identifier and the white-box key payload, the second device being connected or coupled to the first device;
- send, to a second server, through a second channel, a data payload request for getting a data payload relating to the white-box data, the data payload request including or being accompanied with the unique identifier.

The second server is configured to send, to the first server, a seed request for getting at least one seed, the seed request including or being accompanied with the unique identifier.

The first server is configured to:
- retrieve, based on the unique identifier, the at least one seed;
- send, to the second server, as a seed request response, the at least one seed.

The second server is configured to:
- generate, on the fly, by using the at least one seed, the white-box data payload; and
- send, to the first device, through the second channel, as a data payload request response, the white-box data payload. And the first device is configured to store or let store, by the second device, the white-box data payload.

The system may include a first Terminal Equipment (or TE) including a mobile phone, as a first device, one or several SEs, as a second device(s), a first server and at least one second server.

### Brief description of the drawings:

Additional features and advantages of the invention will be apparent from a detailed description of one preferred embodiment of the invention, given as an indicative and non-limitative example, in conjunction with the following drawings:

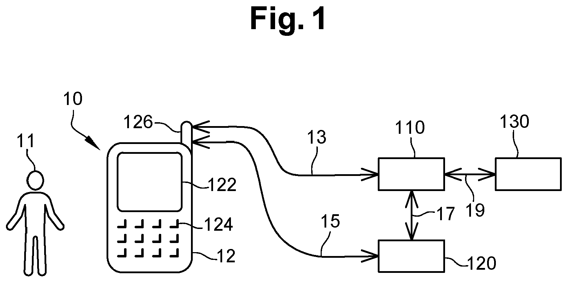

- Figure 1 illustrates a simplified diagram of an embodiment of a system comprising a phone and three servers, the phone being arranged to request, through a first channel, from a first server, a key payload relating to a WBK, the first server being configured to send back the WBK payload and a UID, and the phone being adapted to request, through a second channel, from a second server, a data payload relating to WBD associated with the WBK along with the UID, according to the invention; and

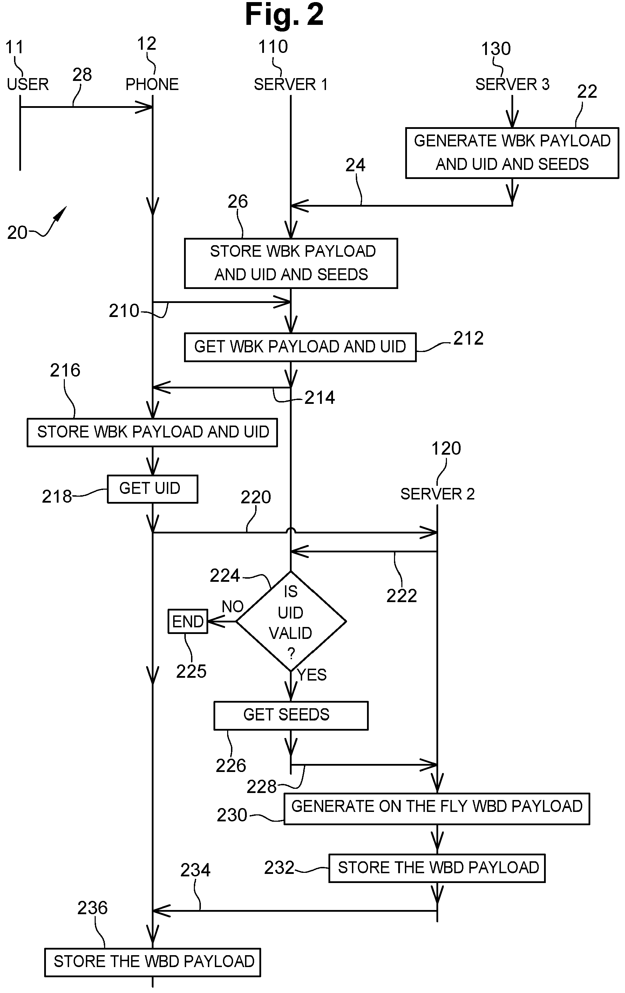

- Figure 2 represents an embodiment of a message flow between the phone, the first and the second server and a third server of figure 1, so that, once the first server has provided the phone with the WBK payload and the UID, the phone sends the WBD payload request along with the UID to the second server and the second server, after having retrieved from the third server a seed(s), generates, on the fly, and sends back, through the second channel, a corresponding WBD payload.

### Detailed description:

Herein under is considered a case in which the invention method for provisioning WB assets is implemented by a phone, as a standalone device, and three servers including an HSM or SSM type server, as a third server that allows generating, for each requesting device, a key payload relating to a WBK. The device does not need to cooperate with another device, at the client side, like e.g., an SE, so as to carry out the function(s) that is(are) described infra at the client side.

According to another embodiment (not represented), the invention method for provisioning a WB application with WB assets is implemented by a phone, as a first and an SE host device, that cooperates with an SE, as a second device, and three servers. According to such an embodiment, the SE is adapted to perform the functions that are carried out by the host device and that are described infra by adding a secure data storage and a secure data processing in the SE at the client side. The SE may include an incorporated chip, like e.g., an embedded Universal Integrated Circuit Card (or eUICC) or an integrated Universal Integrated Circuit Card (or iUICC), within a terminal, as an SE host device, or a chip that is communicatively coupled to the terminal, as an SE host device, and included in a smart card (or another medium). The chip may be fixed to or removable from its host device. As removable SE, it may be a Subscriber Identity Module (or SIM) type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled to a host device. The invention does not impose any constraint as to a kind of the SE type.

Naturally, the herein below described embodiment is only for exemplifying purposes and is not considered to reduce the scope of the invention.

**Figure 1** shows schematically a system 10 including a (mobile) phone 12, as a device, a first ServeR (or SR1) 110, a second ServeR (or SR2) 120 and a third ServeR (or SR3) 130.

The phone 12 is used by a user 11.

Instead of a phone, the device may include a PC, a tablet, a desktop computer, a laptop computer, a media-player, a game console, a tablet, a netbook, a smart watch, a smart jewel (or jewelry), a handset and/or a Personal Digital Assistance (or PDA) that incorporates or cooperates with a baseband (radio) processor(s). The device may be any other device including means for processing data, comprising or being connected to communication means for exchanging data with outside, and comprising or being connected to means for storing data.

The phone 12 includes one or several (micro)processors (and/or a (micro)controller(s)) (not represented), as data processing means, comprising and/or being connected to one or several memories, as data storing means, comprising or being connected to means for interfacing with the concerned user, such as a Man Machine Interface (or MMI), and comprising or being connected to an Input/Output (or I/O) interface(s) (not represented) that are internally all connected, through an internal bidirectional data bus. The I/O interface(s) is(are) connected to an antenna(s) 126 for wirelessly exchanging data with outside.

The phone antenna(s) 126 allow(s) the phone 12 to communicate, preferably through a first 13 and a second 15 Radio-Frequency (or RF) links, as a wireless link(s), via a communication network(s), data notably with the SR1 110 and the SR2 120 respectively.

The RF may be fixed at several hundreds of MHz, e.g., around 850, 900, 1800, 1900 and/or 2100 MHz, as a Long Range (or LR) type RF(s).

Additionally or alternately, the communication network(s) may include a WLAN (acronym for "Wireless Local Area Network"), an Internet and/or Intranet type network(s). Such a communication network(s) may be accessed, from the phone 12, through a Short Range (or SR) radio-communication link(s), like e.g., a Bluetooth, Bluetooth Low Energy (or BLE), Wi-Fi, ZigBee, Near Field Communication (or NFC) type link(s).

Alternately or additionally to the LR type RF(s), the phone 12 is connected to or includes Contact-Less (or CL) communication means for exchanging data with outside, like e.g., via a Wi-Fi- Hotspot (not represented), as a Network Access Point (or NAP), with the server side.

Within the present description, the adjective "CL" denotes notably that the communication means communicates via one or several SR type RF links.

The SR type RF link(s) may be related to any CL technology that allows the phone 12 to exchange locally data, through a CL type link(s), with the server side or at least one local device, such as a chip or SE medium. The SR RF(s) may be related to e.g., an NFC, a Wi-Fi, a Bluetooth and/or a BLE type communication technology(ies) or the like, as a non-mobile (radio) communication channel(s).

Alternatively, instead of a wireless and/or CL link(s), or additionally, the phone 12 is connected, through a wire(s) or a cable(s) (not represented), to the server side.

The communication network(s) may include a mobile radio-communication network(s), like e.g., a Global System for Mobile Communications (or GSM), a General Packet Radio Service (or GPRS), a Universal Mobile Telecommunications System (or UMTS), an EDGE (acronym for "Enhanced Data rates for GSM Evolution"), a Code Division Multiple Access (or CDMA) and/or a Long Term Evolution (or LTE) type network(s). Such a mobile radio-communication network set is not exhaustive but only for exemplifying purposes.

The phone memories may include one or several EEPROMs (acronym for "Electrically Erasable Programmable Read-Only Memory"), one or several ROMs (acronym for "Read Only Memory"), one or several Flash memories, and/or any other memories of different types, like one or several RAMs (acronym for "Random Access Memory").

The phone memories may include one or several volatile memories and one or several non-volatile memories.

A phone 12 memory(ies) may store a first and/or a last name(s) relating to the user 11, as a user IDentifier(s) (or ID(s)), an International Mobile Equipment Identity (or IMEI), a Mobile Subscriber Integrated Services Digital Network number (or MSISDN), an Internet Protocol (or IP) address, an International Mobile Subscriber Identity (or IMSI), an email address(es) and/or the like, as an ID(s) relating to the phone 12.

Alternately, a chip (not represented) that is connected or communicatively coupled to the phone 12 stores at least a part of the user ID(s) and/or at least a part of the phone ID(s).

The phone 12 (or a chip or an SE cooperating with the phone 12) memory(ies) store(s) preferably in a secure manner, such as a reference Personal Identity Number (or PIN) and/or a reference biometric print(s) (like e.g., a reference fingerprint(s), a reference facial print(s) and/or a reference iris print(s)), so as to authenticate the user 11.

The phone 12 (or the cooperating chip or SE) memory(ies) store(s) preferably an ID relating to the SR1 110 and/or an ID relating to the SR2 120. The SR1 ID, such as a Uniform Resource Locator (or URL) 1 or a Uniform Resource ID (or URI) 1, allows identifying uniquely and addressing the SR1 110. The SR2 ID, such as a URL2 or a URI2, allows identifying uniquely and addressing the SR2 120.

The phone 12 may include or be connected or communicatively coupled to one or several chips (not represented).

The chip(s) is(are) incorporated, possibly in a removable manner, within a Printed Circuit Board (or PCB) of the phone, as a chip host device.

The chip(s) may also incorporate at least part of the phone component(s), like e.g., a baseband processor, an application processor(s) and/or other electronic component(s).

In a particular embodiment, the chip(s) include(s) a Trusted Execution Environment (or TEE), as a secure area of a phone (or host device) processor and a secured runtime environment.

Alternately, the chip(s) may be included in or removable from one or several SEs.

The SE(s) belong(s) preferably to the concerned user 11, possibly as a subscriber to a wireless service(s).

The (or each) SE includes one or several chip(s) comprising each a (micro)processor(s) (and/or a (micro)controller(s)), as data processing means (not represented), a memory(ies), as data storing means (not represented), and one or several I/O interfaces (not represented) that are internally all connected, through an internal bidirectional data bus, to each other.

Each (SE) chip I/O interface allows communicating data from the internal SE chip(s) to the chip exterior and conversely.

An (SE) chip memory stores an Operating System (or OS).

The (chip) medium may include, instead of the phone 12, a watch, a headset or the like, as an accessory of the phone 12 that is able to exchange with the phone 12. The (chip) medium may include any other wearable device, like e.g., a camera, a clothing, a jewel (or jewelry) of the (phone) user 11 or anything that may accommodate or integrate the SE chip(s), which the user 11 wears or accesses.

The (phone) user 11 and/or the phone 12 is(are) identified and accessible from any other entity, such as the SR1 110 and the SR2 120.

The phone MMI may include a display screen(s) 122, a keyboard(s) 124, a loudspeaker(s) (not represented) and/or a camera(s) (not represented).

The phone MMI allows the user 11 to interact with the phone 12.

The phone MMI may be used for presenting information to its user 11, like e.g., a message(s) for prompting the user 11 to enter or provide user authentication data and/or a Registration Code (or RC), such as "Please enter your PIN" and/or "Please enter your registration code" respectively.

The phone MMI is preferably used for getting data entered or provided by the user 11, such as user authentication data, like e.g., a PIN and/or user biometric data (like e.g., a fingerprint(s), a facial print(s) and/or an iris print(s)), and/or an RC.

The RC may have been previously provided to the user 11, through a mail, a Short Message Service (or SMS) type message or a message through another out-of-band channel with respect to channels used for conveying WB assets to be loaded at the phone 12 side.

The RC is preferably used for launching a load of WB assets from the server side to the client device side after its submission from the client device side to the server side.

The RC may be used at the server side to identify and authenticate a registered or enrolled client device and/or device user and, when valid, launch a provisioning of WB assets to the concerned client device, such as the phone 12, or a device(s), such as a chip(s) or an SE(s), cooperating with the client device.

A phone 12 memory(ies) store(s) stores an OS and preferably an invention application for provisioning WB assets to a WB application (and/or an SDK).

Alternately, instead of the phone 12, an SE cooperating with the phone 12 stores the invention application for provisioning WB assets to a WB application (and/or an SDK).

The WB assets include a WB Key (or WBK) and associated WB Data (or WBD) to be provisioned to the concerned WB application (and/or the SDK).

A phone 12 memory(ies) store(s) a WB application and/or an SDK that use(s) WB assets to be provisioned to the phone 12 (and/or the cooperating chip or SE) memory(ies).

The WB application and/or the SDK has been previously loaded from an application server. The application server provides one or several applications and is preferably distinct from the SR1 110, the SR2 120 and the SR3 130.

The WB application includes a predefined WB executor. The WB executor constitutes an obfuscated SW implementation of a cryptographic operation, like e.g., a keyed Hash Message Authentication Code (or HMAC), that uses a cryptographic function and a Secret (cryptographic) Key (or SK). The HMAC is a specific type of MAC that uses a cryptographic hash function and the SK. The HMAC is used for verifying both the data integrity and the authentication of a message. The cryptographic hash function includes e.g., Secure Hash Algorithm (or SHA) 256 that is used for determining the HMAC.

The WB executor carries out the cryptographic operation that uses, instead of the SK, the associated WB assets, as input data.

The WB executor includes preferably predetermined WB embedded data. In other words, the WB executor incorporates, in its associated code (i.e. program instructions), the WB embedded data.

The WB embedded data has been previously loaded and is present prior to launching a provisioning of WB assets.

The WB embedded data has been generated by using a first set of one or several seeds, such as a RanDom (or RD), as a first seed set.

Such an RD is used for diversifying data to be generated from the RD. The RD thus allows adding entropy.

For example, for the HMAC SHA-256, as the cryptographic operation that is executed by the WB executor, the WB embedded data is generated by using only a SHared Seed (or SHS), such as an RD1. The SHS is one and the same seed for all of the users of the client devices or all of the client devices.

The first seed set is used for generating WB protections contained in the WB embedded data. The generation of, on one hand, the first seed set, and, on the other hand, the WB embedded data is preferably carried out on a trusted entity, such a HSM or SSM type entity, or environment during a build of the WB application.

The WB application does not expose the first seed set.

The WB embedded data is generic and valid for all of the WB applications that are supported by corresponding client devices.

The WB embedded data is accessible from outside.

When executed by the phone 12 (or the cooperating chip or SE), the WB application uses, through the WB executor, the WB assets to be loaded, namely a WBK payload and an associated WBD payload, as input data, the WB embedded data and optionally input data, like e.g., an amount of a predetermined transaction to be signed.

The WB executor needs the three types of data, namely the WBK payload, the WBD payload, both as input data, and the WB embedded data, in order to carry out a cryptographic operation.

The transaction may be an on-line (or remote) transaction or a CL (or local) transaction.

The WBK payload is specific to the user 11.

A result of the WB application execution by the phone 12 (or the cooperating chip or SE) is output data, such as signed transaction data, by using the WB assets for e.g. signing a given transaction, as possible input data. The signed transaction data allows proving that the user 11 has approved the concerned transaction.

The WB assets are specific to the user 11. The WBK is preferably kept protected and secret, i.e. not accessible from outside. The WBK is more sensitive than the WBD.

The WB assets may be used, in a restricted manner, such as in a predetermined limited number of transactions and/or in a predetermined time period.

A phone 12 (or the cooperating chip or SE) memory stores preferably a predetermined Provisioning Key (or PK). The PK is a (symmetric) key shared with the server side, so as to exchange data, in a secure manner, between the concerned server(s) and the phone 12.

The PK is preferably to be used for encrypting, at the client device side, a key payload request for getting a key payload relating to a WBK to be sent, through a first channel, via the first link 13, to the server side. The key payload request includes or is preferably accompanied with an RC to be provided either by the user 11 or automatically, preferably only when the user 11 is successfully authenticated, by or through the phone 12.

The PK is preferably to be used for decrypting, at the client device side, a WBK payload and e.g., a Unique Universal ID (or UUID), as a Unique ID (or UID), to be both provisioned, in an encrypted manner, from the server side.

The RC may be received, from the server side, along with a script to be executed at the phone side. Once the RC is received, the phone 12 (or the cooperating chip or SE) stores preferably, in a secure manner, the RC.

When executing the script, the phone 12 (or the cooperating chip or SE) requests preferably the user 11 to firstly authenticate to access the received RC.

To authenticate the user 11, the phone 12 (or the cooperating chip or SE) stores an application for verifying user authentication data, such as a PIN and/or a biometric print(s). The phone 12 (or the cooperating chip or SE) memory(ies) store(s), preferably in a secure manner, predetermined reference user authentication data that has to be input or submitted by the user 11, in order to be successfully authenticated.

When executing the user authentication data verifying application, the phone 12 (or the cooperating chip or SE) prompts, through the phone MMI and/or an MMI connected to the phone 12, the user 11, to submit user authentication data. The user 11 submits, through the phone MMI and/or the MMI connected to the phone 12 (or the cooperating chip or SE), to the phone 12, user authentication data. The phone 12 (or the cooperating chip or SE) verifies whether the submitted user authentication data does or does not match the predetermined reference user authentication data. If the submitted user authentication data does not match the reference user authentication data, then the phone 12 (or the cooperating chip or SE) does not get and send the RC. Otherwise, i.e. if the submitted user authentication data matches the reference user authentication data, the phone 12 (or the cooperating chip or SE) gets or retrieves the RC that has been previously entered by the user 11 or received from the server side.

Only when the user 11 needs to execute the WB application, i.e. when the user 11 desires to carry out e.g., a given transaction, such as an e-commerce transaction, the phone 12 (or the cooperating chip or SE) carries out the invention method for provisioning WB assets, so as to configure properly the phone 12 (or the cooperating chip or SE).

After having preferably authenticated the user 11 and/or after having been provided by the user 11, the phone 12 (or the cooperating chip or SE) is adapted to send, via the first link 13, through a first channel, to the SR1 110, a key payload request for getting a key payload relating to a WBK. The key payload request includes or is accompanied preferably with an RC that is either provided by the user 11 or retrieved by the phone 12 (or the cooperating chip or SE). The key payload request and/or the RC has(have) been previously encrypted by the phone 12 (or the cooperating chip or SE) by using the PK and a predefined data encryption algorithm, such as an Advanced Encryption Standard (or AES).

The first channel includes e.g., a HyperText Transfer Protocol Secure (or HTTPS) type channel or any other data communication channel.

The first channel is preferably secure, in order to protect data that is exchanged between the phone 12 and the SR1 110.

The phone 12 (or the cooperating chip or SE) is arranged to receive, through the first channel, as a key payload request response, preferably in an encrypted manner, the WBK payload and a UID.

The UID is used for correlating the loaded WBK payload to associated WBD payload to be loaded at the phone 12 side. The UID is preferably not known to the user 11. In other words, the UID is transparent to the user 11.

A phone 12 and/or the cooperating chip (or SE) memory(ies) store(s), after a possible decryption by using the PK, the (received) WBK payload and/or the (received) UID.

The WBK payload constitutes a first data file. The first data file has a first size. The first size is included in a first range of e.g., about 1 kb to e.g., about 1 Mb.

The phone 12 (or the cooperating chip or SE) is adapted to send, via the second link 15, through a second channel, to the SR2 120, a data payload request for getting a data payload relating to associated WBD. The WBD payload request includes or is accompanied with the UID.

The second channel includes e.g., an HTTPS type channel or any other data communication channel.

The second channel may be secure, in order to protect data that is exchanged between the phone 12 and the SR2 120.

The second channel is preferably separate from the first channel.

The phone 12 (or the cooperating chip or SE) is arranged to receive, through the second channel, as a data payload request response, the WBD payload possibly in an encrypted manner.

A phone 12 and/or the cooperating chip (or SE) memory(ies) store(s), after a possible decryption by using the PK, the (received) WBD payload.

The WBD payload constitutes a second data file. The second data file has a second size. The second size is included in a second range of e.g., about 100 kb to e.g., about 5 Mb. The second size is greater than the first size.

In a preferred embodiment, the SR1 110, the SR2 120 and the SR3 130 are separate from each other. Alternatively, two servers, such as either the SR1 and the SR3 or the SR1 and the SR2, form one and the same server (not represented).

Each server, namely the SR1 110, the SR2 120 and the SR3 130 may be operated by a Mobile Network Operator (or MNO), a Mobile Virtual Network Operator (or MVNO), a bank operator, a service provider or on its behalf.

The SR1 110 and the SR2 120 are accessible, Over-The-Air (or OTA), Over-The-Internet (or OTI) and/or Over The Cloud (or OTC), over a communication network(s) (not represented), from client devices that support each a WB application and/or an SDK (not represented) that has to be personalized.

The SR1 110 is connected, over the first (bi-directional) link(s) 13, through the communication network(s), to the phone 12 (or a cooperating chip or SE) included in a fleet of possible target devices that may each request to be provisioned with WB assets.

The SR1 110 is identified by a URI1, a URL1, an IP address 1 and/or the like, as an ID(s) relating to the SR1 110. The SR1 ID(s) may be recorded at the phone 12 side (e.g., in the phone 12 (or the cooperating chip or SE) memory).

The SR1 110 is hosted by a computer including data processing means, like e.g., a processor(s) (not represented), data storing means, and one or several I/O interfaces for exchanging data with outside.

The SR1 110 (processor) is used for running an application for providing each (requesting) client device with a key payload relating to a WBK and a UID (not represented).

The WBK is specific to the client device.

The UID is used as an ID for correlating WBD payload to be secondly loaded to the concerned requesting client device to a WBK payload to be firstly loaded to the concerned requesting client device.

The SR1 110 plays preferably a role of a provider of a key payload relating to a predefined WBK in association with a predetermined UID.

The SR1 110 includes (or is connected to) a first server memory(ies) (not represented), as data storing means. The first server memory(ies) store(s) preferably (or accesses) a first database that includes data relating to a plurality of client accounts.

Each client account is associated with one or several IDs of an associated client device(s), as data relating to each client account.

The data relating to each client account may include a predefined associated UID.

The data relating to each client account may further include one or several IDs of the concerned associated user.

The data relating to each client account may include a public key relating to each client device that may be used for verifying a corresponding signature issued by the concerned client device.

Each client account may be associated with an IMSI(s), a URI(s), a URL(s), an email address(es), an IP address(es), an MSISDN(s) and/or the like, as one or several IDs relating to an associated device(s) that may be used at the client device side.

The device ID(s) allow(s) identifying uniquely a corresponding client device to be addressed from the server side.

The SR1 110 is preferably configured to receive, through a first channel, a key payload request for getting a key payload relating to a WBK. Such a key payload request may originate from a (registered) client device. The key payload request includes or is accompanied preferably with an RC.

The SR1 110 is preferably arranged to check whether the received RC does or does not match a predefined reference RC that is associated with the concerned client device.

The SR1 110 is adapted to retrieve, based on the requesting client device ID(s) and/or the received RC, a predefined key payload relating to a WBK and a predefined UID that is associated with a payload relating to WBD. The WBD payload is to be generated.

Each UID may be stored in a second database in association with a corresponding payload relating to the WBD (to be generated).

The SR1 110 and/or the SR2 120 may access to the second database.

Such a WBK payload and UID retrieval is carried out preferably only if the received RC matches the reference RC.

The SR1 110 is arranged to store the WBK payload and the associated UID, preferably in an encrypted manner, for each client device of a fleet of client devices.

The SR1 110 is preferably configured to send, through the first channel, to the requesting client device, the retrieved WBK payload and UID, after having preferably encrypted, by using the PK, both of the retrieved WBK payload and UID prior to their sending.

Once the WBK payload and UID have been sent, the SR1 110 may be arranged to set a variable relating to the UID to an active status, like e.g., "1", instead of an inactive status like e.g., "0", while the SR1 110 has not sent the concerned UID. Such a UID variable indicates, depending on its value, as either a value relating to an inactive status, as a default value, or a value relating to an active status, that either the SR1 110 has not sent the UID or the SR1 110 has sent the UID to the requesting client device respectively. The UID value and the UID variable value are both preferably registered in association with the WBK payload.

The SR1 110 is preferably arranged to receive, from the SR2 120, a UID and possibly a client device ID.

The SR1 110 records the received UID and possibly the received client device ID in an associated manner.

The SR1 110 is preferably configured to check whether a value of the received UID does or does not match a predefined registered UID value for the concerned WBK payload.

If the received UID value matches the registered UID value, then the received UID is effectively the one that is allocated to the concerned WBK payload. In such a first case, the received UID is valid.

Otherwise, i.e. if the received UID value does not match the registered UID value, the received UID is not the one that is allocated to the concerned client device. In such a second case, the received UID is not valid.

The SR1 110 is preferably further adapted to check whether a value of the UID variable does or does not match a predefined value relating to an active status for the concerned client device.

If the UID variable value matches the active status value, then the registered UID has effectively already been sent to the concerned client device. In such a first case, the received UID is valid.

Otherwise, i.e. if the UID variable value does not match the active status value, the registered UID has not been sent to the concerned client device. In such a second case, the received UID is not valid.

The SR1 110 may be further adapted to check whether one or several additional conditions, such as a predefined time period during which the UID is usable, are or are not satisfied by the received UID.

If all of the additional condition(s) is satisfied by the received UID, then the received UID is valid.

Otherwise, i.e. if at least one of the additional condition(s) is not satisfied by the received UID, the received UID is not valid.

The SR1 110 is adapted to retrieve, based on the received UID, one, two (or more) seeds, as a second set of seed(s). The second set seed(s) is(are) registered either in association in the client account data for the concerned client device or in the second database in association with the UID. Such a second set seed retrieval is carried out preferably only if the received UID is valid, i.e. the received UID value matches the registered UID value for the concerned client device and preferably the UID variable value matches the active status value. The second set seed(s) is(are) preferably stored in an encrypted manner.

The SR1 110 is preferably configured to send, to the SR2 120, for the concerned client device, the retrieved second set seed(s), after having optionally encrypted, by using a key, such as a symmetric key shared with the SR2 120, the second set seed(s) prior to their sending.

The SR1 110 (processor) may execute one or several security functions, in order to protect access to information managed through or by the SR1 110.

The security functions include preferably a data signature verification by using a public key related to each sender of data that is received, so as to prove that an originator of received data is the SR3 130, the SR2 120 or a registered client device.

The security functions include preferably a data encryption process by using a PK, as a symmetric key shared with a client device(s), as a sender(s) of a key payload request, so as to generate encrypted data, such as the WBK payload and the UID, prior to its sending to the concerned requesting client device(s).

The SR2 120 is connected, over the second (bi-directional) link(s) 15, through the communication network(s), to the client device included in a fleet of possible target devices that may each request to be provisioned with individual WB assets.

The SR2 120 is connected, over a third (bi-directional) link(s) 17, to the SR1 110.

The SR2 120 is identified by a URL2, a URI2, an IP address 2 and/or the like, as an ID(s) relating to the SR2 120. The SR2 ID(s) may be recorded at the client side or provided by the SR1 110 possibly at the time the SR1 110 provides the client device with a WBK key payload.

The SR2 120 is hosted by a computer including data processing means, like e.g., a processor(s) (not represented), data storing means, such as one or several volatile memories, and one or several I/O interfaces for exchanging data with outside.

The SR2 120 (processor) is used for running an application for providing each (requesting) device with a data payload relating to WBD (not represented).

A WBD payload is to be generated, by the SR2 120, only once a client device has requested the WBD payload, and when a UID to be received from a requesting client device is present and preferably valid, i.e. is associated with a registered client device and satisfies possibly one or several conditions that are preferably verified at the SR1 110 side.

The WBD payload is specific to the client device.

The WBD payload is to be used, by a WB application supported at the client device side, only in association with a WBK payload that has been previously provided to the client device.

The registered UID is used, as an ID for correlating a WBD payload to be loaded to a WBK payload that has already been loaded into the requesting client device. The registered UID is associated with a WBD payload to be loaded and a corresponding loaded WBK payload.

The WBD payload is to be used only in association with the corresponding WBK payload by the WB application.

The SR2 120 plays preferably a role of an issuer of a WBD payload to a requesting client device(s) only when the requesting client device provides a UID that is valid.

The SR2 120 is preferably configured to receive, through a second channel, from a requesting device, a data payload request for getting a data payload relating to WBD. Such a data payload request may originate from a registered client device. The data payload request includes or is accompanied with a UID.

The SR2 120 is preferably arranged to transmit to the SR1 110 a seed request for getting one or several seeds, as a second seed set. The seed request includes or is accompanied with the received UID. The received UID allows identifying the second seed set that is associated with the UID. The received UID may further allow identifying a client account for the concerned requesting client device. The received UID is preferably analysed by the SR1 110 (or the SR2 120) to determine whether the received UID is or is not valid for the concerned requesting client device.

The SR2 120 is preferably arranged to receive, from the SR1 110, preferably only if the received UID is valid, as a seed request response, one, two or more seeds, such as an RD(s).

The SR2 120 is adapted to generate, preferably only if the received UID is valid, on-the-fly, an associated data payload relating to WBD.

For example, for the HMAC SHA-256, as the cryptographic operation that is executed by the WB executor, the WBD payload is generated, by the SR2 120, by using a SPecific Seed (or SPS) and an SHS, namely the SHS, like e.g., the RD1, that has been used for generating the WB embedded data. The SPS, like e.g., an RD2, is used only for a user or a client device. The SHS is one and the same seed for all of the users of the client devices or the client devices. For a given user, there is only one WBD payload, irrespective of the number of the SK(s) for the concerned user or client in its wallet.

The SR2 120 is preferably configured to send, through the second channel, to the concerned requesting client device, as a data payload request response, the (generated) WBD payload, after having optionally encrypted the WBD payload prior to its sending.

The SR2 120 (processor) may execute one or several security functions, in order to protect access to information managed through or by the SR2 120.

The security functions include preferably a data signature verification by using a public key related to each requesting client device, as sender of data, such as a data payload request including or accompanied with a UID or a WBD payload, that is received, so as to prove that an originator of received data is either a registered client device or the SR1 110 respectively.

The security functions include preferably a data encryption process by using the PK, as a symmetric key shared with the client device(s), as a sender(s) of a data payload request, so as to generate encrypted data, such as the WBD payload, prior to its sending to the concerned requesting client device(s).

The security functions include preferably a WBD payload deletion or erasure operation that is executed once the SR2 120 has effectively sent the WBD payload to the requesting client device. Such a WBD payload deletion or erasure operation allows reducing the risk of being retrieved by a hacker or a malicious software and therefore increasing the protection of the WBD payload.

The SR3 130 is connected, over a fourth (bi-directional) link(s) 19, through possibly a communication network(s), to the SR1 110.

The SR3 130 is identified by a URI3, a URL3, an IP address 3 and/or the like, as an ID(s) relating to the SR3 130. The SR3 ID(s) may be recorded at the SR1 110 side.

The SR3 130 is hosted by a computer including data processing means, like e.g., a processor(s) (not represented), data storing means, and one or several I/O interfaces for exchanging data with outside.

The SR3 130 may include an HSM or SSM type entity.

The SR3 130 (processor) is used for running an application for providing the SR1 110 with a WBK payload, a UID, a seed(s), as a second set of seed(s), and optionally an RC that are associated with each client device that is registered at the SR1 110 and that is likely to request to be provisioned with WB assets.

The SR3 130 plays preferably a role of a generator and a provider of a WBK payload, a UID, optionally an RC that are associated with each client device registered at the SR1 110.

The SR3 130 is preferably configured to generate firstly, one or several SKs, secondly, one or several seeds, as the second set seed(s), thirdly, by using a WBK payload generation algorithm, a WBK payload for each device of a fleet of client devices.

For example, for the HMAC SHA-256, as the cryptographic operation that is executed by the WB executor, the WBK payload is generated, by the SR3 130, by using the SK and an SPS, namely the SPS, like e.g., the RD2, that has to be used for generating the associated WBD payload. For a given user, there are as many WBK payloads as the number of the SK(s) for the concerned user or client in its wallet.

The or each SK is kept only at the SR3 130 side for a given user or client. The or each SK is preferably destroyed or transmitted to another server as soon as the WBK payload has been generated for a given user or client. The corresponding WB assets (including the WBK payload) replace the SK(s) at the client side for a given user or client.

The second set seed(s) may be, each, an RD.

The second set seed(s) is(are) preferably specific to the user or the client device.

The SR3 130 is preferably adapted to generate an RC for each device of a fleet of client devices.

The SR3 130 may be arranged to send, through an out-of-band channel, to a user or an associated registered client device, the (generated) RC for each device of a fleet of client devices.

The SR3 130 is preferably adapted to generate a UID for each device of a fleet of client devices.

The UID may include an RD. The UID has preferably a life time period that is rather short, like e.g., from about a few seconds to about a few minutes. The UID life time period corresponds roughly to a time period between the time at which the SR1 110 sends to a client device the WBK payload in association with the UID and the time at which the SR2 120 receives from the client device a request for getting a payload relating to WBD (associated with the WBK payload) and the UID. Due to such a short UID life time period, the UID existence is therefore ephemeral.

Each generated UID may be e.g., a UUID, as known per se, that is a 128-bit number that is used for identifying information, namely the UID, in a computer system(s).

The SR3 130 is preferably arranged to transmit, to the SR1 110, the (generated) WBK payload, after having optionally encrypted, by using a predetermined DPK, the WBK payload prior to its sending.

The SR3 130 is preferably configured to receive, from the SR1 110, a seed request for getting one or several seeds, as the second seed set, and to send, to the SR1 110, as a seed request response, one, two (or more) seeds, after having optionally encrypted, by using the DPK, the seed(s) prior to their sending.

The SR3 130 (processor) may execute one or several security functions, in order to protect access to information managed through or by the SR3 130.

The security functions include preferably a data decryption/encryption process by using a predefined Data Protection Key (or DPK). The DPK constitutes preferably a key that is not shared with any of the other involved servers, such as the SR1 110 and the SR2 120. The SR3 130 accesses, by using the DPK, resulting decrypted data (i.e. in plain text), that includes preferably the WBK payload and the UID and/or the seed(s), that is preferably received, from the SR1 110, in an encrypted manner.

The security functions include preferably a data signature verification by using a public key related to the SR1 110, as sender of data that is received, so as to prove that an originator of received data is the SR1 110.

The security functions include preferably a data encryption process by using the DPK, so as to generate encrypted data, such as a WBK payload and a UID for each user or client device and a seed(s) for each client device of a fleet of client devices, prior to its sending to the SR1 110.

**Figure 2** depicts an exemplary embodiment of a message flow 20 that involves the user 11, the (user) phone 12, as a client device included in a fleet of client devices, the SR1 110, the SR2 120 and the SR3 130.

In the described example, it is assumed that the user 11 has launched a web browser supported by the phone 12, to buy or rent, on-line, to an e-commerce site one or several products and/or one or several services after having entered, by using the phone MMI, a user first/last name(s) or an email address(es), as a user ID(s). The user 11 needs to perform an on-line transaction with her/his phone 12.

It is further assumed that the user 11 is registered, at the SR1 110 side, with an ID(s) relating to her/his phone 12 in a corresponding client account among a set of client device accounts.

In a preferred embodiment, the SR1 110 is the sole server to know the client device account set.

Firstly, the SR3 130 generates 22 a set of key payloads relating, each, to a WBK, a set of an individual seed(s) associated e.g., in pairs, and a UID for each (generated) WBK payload.

In a preferred embodiment, the SR3 130 does not know the client device and therefore the association of a given WBK payload and a seed(s) with any specific user or client device.

The SR3 130 encrypts preferably the WBK payload, the UID and the individual seed(s), in association, by using the DPK.

Then, the SR3 130 sends 24 to the SR1 110 the WBK payload, the associated UID and the associated seed(s) that are preferably previously encrypted.

The SR1 110 stores 26 or accesses a first database comprising the WBK payload in a corresponding client account that the SR1 110 allocates to the phone 12. The SR1 110 stores 26 or accesses a second database (or the first database) comprising, for each generated UID, the UID and the associated seed(s).

Optionally, the SR3 130 generates (not represented) additionally an RC in association with the WBK payload, the associated seed(s) and the associated UID for the phone 12 (that the SR3 130 may not know). The SR3 130 (or the SR1 110 or another server connected to the SR3 130) sends (not represented), through e.g., a mail or an SMS, as an out-of-band channel that is separate from the channels used for provisioning at the phone 12 side WB assets, to the user 11 or to the phone 12, the RC. The SR3 130 sends (not represented) to the SR1 110, the RC that the SR1 110 stores or lets store, as a predetermined reference RC, in association with the WBK payload, the associated seed(s) and the associated UID that are allocated, by or through the SR1 110, to the phone 12.

The user 11 launches, by interacting e.g., while, when the RC is transmitted to the user 11, providing 28, through the phone MMI, the phone 12 with the RC or, without any RC, actuating a button, to trigger an execution of the supported application for provisioning the phone 12 with WB assets.

Alternately, instead of being provided by the user 11, when the RC is transmitted to the phone 12 along with a script that requests the user 11 to firstly authenticate to the phone 12, the phone 12 executes (not represented) the received script to access the RC. Then, the phone 12 prompts the user 11 to submit user authentication data. The user 11 submits user authentication data. The phone 12 verifies whether the submitted user authentication data does or does not match predetermined reference user authentication data (that is stored by the phone 12). The phone 12 retrieves, only if the submitted user authentication data matches the reference user authentication data, the RC.

Once the execution of the WB asset provisioning application is launched at the phone 12 side, the phone 12 sends 210 to the SR1 110, through a first channel, a request for getting a payload relating to a WBK. The WBK payload request includes or is accompanied preferably with the RC.

The SR1 110 verifies (not represented) preferably whether the received RC does or does not match the reference RC.

If the WBK payload and the (associated) UID are stored in an encrypted manner, then the SR1 110 decrypts or lets the SR3 130 decrypt (not represented) the encrypted WBK payload and UID. In such a latter case, the SR1 110 requests the SR3 130 to decrypt the encrypted WBK payload and UID. The SR3 130 decrypts, by using e.g. the DPK, the encrypted WBK payload and UID and sends to the SR1 110 the WBK payload and UID in plain text (i.e. not encrypted).

The SR1 110 retrieves 212, preferably only if the received RC matches the reference RC (when applicable), the WBK payload and the UID. The WBK payload and the UID may be associated with the phone 12 and/or the user 11, in the concerned client account.

The WBK payload is typically about 250 b. The WBK payload is preferably comprised within a range of about 100 b to about 1 Mb.

The UID may be inserted in an SR2 ID, like e.g., an SR2 URL.

The SR1 110 encrypts preferably the WBK payload (and possibly the UID) by using the PK (that is shared with the phone 12).

The SR1 110 sends 214, through the first channel, to the requesting phone 12, as a key payload request response, the WBK payload and the UID, after having preferably encrypted the WBK payload and the UID by using the PK.

The phone 12 stores 216 the WBK payload and the UID, preferably in an encrypted manner.

Alternately, the phone 12 sends, to a cooperating chip or SE, the (received) WBK payload and the UID. The cooperating chip or SE stores, securely, the WBK payload and UID.

Then, the phone 12 retrieves or gets 218 the UID, preferably after having decrypted the encrypted UID by using the PK (or a corresponding key).

The phone 12 sends 220, to the SR2 120, through a second channel, a data payload request for getting a payload relating to the WBD that is associated with the WBK payload. The WBD payload request includes or is accompanied with the UID.

The SR2 120 sends 222, to the SR1 110, a seed request for getting one, two or more seeds, as the second seed set. The seed request includes or is accompanied with the (received) UID.

The SR1 110 (or the SR2 120) verifies 224 whether the received UID is or is not valid, such as whether the UID is or is not present and possibly whether one or several predetermined conditions are or are not satisfied.

If the received UID is not valid, then the SR1 110 aborts or does not continue 225 the launched provisioning of WB assets while not sending to the SR2 120 any registered seed, for the concerned requesting phone 12.

Otherwise, i.e. if the received UID is valid, the SR1 110 retrieves or gets 226, based on the UID, the seed(s) that is(are) stored in association and possibly in the concerned client account. The SR1 110 sends 228, to the SR2 120, as a seed request response, the seed(s), for the concerned requesting phone 12. Prior to sending the seed(s), the SR1 110 decrypts or lets the SR3 130 decrypt (not represented) the encrypted seed(s). In such a latter case, the SR1 110 requests the SR3 130 to decrypt the encrypted seed(s). The SR3 130 decrypts, by using e.g., the DPK (or a corresponding key), the encrypted seed(s) and sends to the SR1 110 the seed(s) in plain text (i.e. not encrypted).

Once the SR2 120 has received the seed(s), the SR2 120 generates 230, on the fly, by using the seed(s), the corresponding WBD payload.

The WBD payload is typically about 2 Mb. The WBD payload is preferably comprised within a range of about 100 kb to about 5 Mb.

The generation time of the WBD payload, around typically a few ms, is less than the necessary bandwidth to send the WBD payload.

The SR2 120 stores 232, in an ephemeral manner, the (generated) WBD payload (i.e. up to a sending of the WBD payload to the requesting device) in a volatile memory(ies). The WBD payload is preferably not stored, even temporarily, on a persistent storage memory(ies), like e.g., a Solid State Drive (or SSD) and/or a Hard Disk Drive (or HDD) type memory(ies). The WBD payload data that is stored in a volatile memory(ies), at any given time, strongly depends on the implementation. Only a part of WBD payload data (i.e. not the whole WBD payload) may be present in a volatile memory(ies) at a given time. A particular implementation uses an incremental generation of WBD payload followed by a corresponding streaming of the incrementally generated WBD payload. Such a particular implementation allows not exposing the whole WBD payload even if the whole WBD payload may be present in a volatile memory(ies) at a given time.

Then, the SR2 120 sends 234, to the requesting phone 12, as a data payload request response, the WBD payload, after having preferably encrypted, by using the PK, the WBD payload.

Thus, the SR2 120 does not have to store, in a non-volatile manner, the WBD payload and therefore does not need to use a database with its constraints and its associated internal data traffic to write and retrieve the WBD payload.

Once the phone 12 has received the WBD payload, the phone 12 stores 236, preferably in a volatile memory(ies) and/or a non-volatile memory(ies), the WBD payload, after having preferably encrypted, by using the PK, the WBD payload.

The phone 12 generates (not represented) output data, such as a signed transaction, by executing the (supported) WB application while using the WB embedded data, the WBK payload and the (associated) WBD payload, as provisioned WB assets , and possibly input data, such as a predetermined transaction.

The phone 12 may have decrypted, by using the PK (or a corresponding key), the encrypted WB assets.

The used WB assets are related to the concerned phone 12 and replace the associated SK at the client side.

The interlocutor or addressee of the thus signed data, namely another entity (like e.g., another server), is able to verify a corresponding signed transaction, by using a predetermined signature verification algorithm(s), like e.g., a HMAC type signature verification algorithm, and a corresponding predetermined signature verification key that are both stored at the addressee side. The signature verification key is preferably a public key that relates to the concerned phone 12 and that has been generated from the associated phone 12 private key SK. If the sent data signature, like e.g., the HMAC signature, is successfully verified, then the corresponding receiver of the sent data knows that the sent data originates from the sender and/or if the sent data integrity, like e.g., a HMAC, is successfully verified, then the sent data has not been altered. Otherwise, i.e. if the verification of the sent data signature and/or the verification of the sent data integrity, like e.g., the HMAC signature, fail(s), something is not right, i.e. the sent data has not been issued by the sender and/or the sent data has been altered during its transmission.

Advantageously, such a provisioning of WB assets is transparent to the user 11, i.e. the user 11 is not aware, apart from providing an RC, that the WB asset provisioning occurs.

The SR3 130 intervenes to generate the most sensitive part of the WB assets, namely the WBK payload, thus rendering easy and therefore cost efficient the implementation of the WB asset generation. The WBK payload generation is completely separate from the associated WBD payload generation, thus providing an enhanced level of security.

The WBD payload is generated, only on-demand from a requesting client device that has been provisioned with the associated WBK payload, which reduces, at the server side, a needed storage for the WB asset provisioning invention solution.

Two distinct channels are used for conveying, on the one hand, a WBK payload with a UID, and, on the other hand, an associated WBD payload along with the UID.

The invention solution does only require few network bandwidth, since only the client devices that need to be provisioned generate, each, a corresponding data traffic, namely a WBK payload and an associated WBD payload (by using an associated UID).

The invention solution allows securing the client devices that are not provisioned with WB assets, since the concerned non-provisioned client devices do not exposed any WB asset.

The invention solution allows carrying out, by involving two (or more) different servers, a secure and efficient deployment of WB assets for each concerned requesting client device.

## Claims

1. A method (20) for provisioning a first (12) or a second device with white-box assets, the white-box assets including a white-box key and associated white-box data, the method comprising:
- a) sending (210), by the first device, to a first server, through a first channel, a key payload request for getting a key payload relating to the white-box key;
- b) retrieving (212), by the first server (110), the white-box key payload and a unique identifier, the unique identifier being associated with a corresponding data payload relating to the white-box data;
- c) sending (214), by the first server, to the first device, through the first channel, as a key payload request response, the unique identifier and the white-box key payload;
- d) storing (216), by the first or second device, the unique identifier and the white-box key payload, the second device being coupled or connected to the first device;
- e) sending (220), by the first device, to a second server (120), through a second channel, a data payload request for getting the data payload relating to the white-box data, the white-box data payload being associated with the white-box key payload, the white-box data payload request including or being accompanied with the unique identifier;
- f) sending (222), by the second server, to the first server, a seed request for getting at least one seed, the seed request including or being accompanied with the unique identifier;
- g) retrieving (226), by the first server, based on the unique identifier, the at least one seed;
- h) sending (228), by the first server, to the second server, as a seed request response, the at least one seed;
- i) generating (230), by the second server, on the fly, by using the at least one seed, the white-box data payload;
- j) sending (234), by the second server, to the first device, through the second channel, as a data payload request response, the white-box data payload; and
- k) storing (236), by the same device as in step d), the white-box data payload.

2. Method according to claim 1, wherein, the first server and the device storing both a predetermined provisioning key, prior to sending the unique identifier and the white-box key payload, the method further comprises:
- encrypting, by the first server, by using the provisioning key, the unique identifier and the white-box key payload; and
- decrypting, by the first or second device, by using the provisioning key, the encrypted unique identifier and the encrypted white-box key payload.

3. Method according to claim 1 or 2, wherein, to retrieve, by the first server, the at least one seed, the at least one seed being stored, by the first server, in an encrypted manner, the method further includes:
- sending, by the first server, to a third server (130), a request for decrypting the at least one encrypted seed;
- decrypting, by the third server, the at least one encrypted seed by using a predetermined data protection key; and
- sending, by the third server, to the first server, the at least one seed.

4. Method according to any previous claim, wherein, prior to sending, by the first server, to the first device, through the first channel, the unique identifier and the white-box key payload, the unique identifier and the white-box key payload being both stored, by the first server, in an encrypted manner, the method further includes:
- sending, by the first server, to a third server (130), a request for decrypting the encrypted unique identifier and the encrypted white-box key payload;
- decrypting, by the third server, the encrypted unique identifier and the encrypted white-box key payload by using a predetermined data protection key; and
- sending, by the third server, to the first server, the unique identifier and the white-box key payload.

5. Method according to any previous claim, wherein, in addition to sending, by the first device, to the first server, through the first channel, the key payload request, the first server accessing a predetermined reference registration code, the method further comprises:
- providing, by a user, the first or second device, with a registration code;
- sending, by the first device, to the first server, through the first channel, the key payload request, the key payload request including or being accompanied with the registration code;
- verifying, by the first server, whether the received registration code does or does not match the predetermined reference registration code; and
- retrieving, by the first server, only if the received registration code matches the predetermined reference registration code, the white-box key payload and the unique identifier.

6. Method according to claim 5, wherein the method further comprises:
- sending, by the first server or a third server (130), to the user, through an out-of-band channel, the registration code.

7. Method according to claim 5, wherein the method further comprises:
- sending, by the first server or a third server (130), to the first or second device, through a third channel, the registration code and a script that requests the user to firstly authenticate to the first or second device to access the registration code;
- prompting, by the first or second device, the user, to submit user authentication data;
- submitting, by the user, to the first or second device, user authentication data;
- verifying, by the first or second device, whether the submitted user authentication data does or does not match predetermined reference user authentication data;
- retrieving, by the first or second device, only if the submitted user authentication data matches the reference user authentication data, the registration code.

8. A first device (12) adapted to be provisioned with white-box assets, the white-box assets including a white-box key and associated white-box data, the first device is configured to:
- send (210), to a first server (110), through a first channel, a key payload request for getting a key payload relating to a white-box key;
- receive (214), from the first server, through the first channel, as a key payload request response, a unique identifier and the white-box key payload;
- store (216) the unique identifier and the white-box key payload;
- send (220), to a second server (120), through a second channel, a data payload request for getting a data payload relating to the white-box data, the data payload request including or being accompanied with the unique identifier;
- receive (232), from the second server, through the second channel, as a data payload request response, the white-box data payload; and
- store (236) the white-box data payload.

9. A second server (120) adapted to provision a first or a second device with a portion of white-box assets, the white-box assets including a white-box key and associated white-box data, the second server is configured to:
- receive (220), from the first device, through a second channel, a data payload request for getting a data payload relating to the white-box data, the white-box data payload being associated with a key payload relating to the white-box key, the data payload request including or being accompanied with a unique identifier;
- send (222), to a first server, a seed request for getting at least one seed, the seed request including or being accompanied with the unique identifier;
- receive (228), from the first server, as a seed request response, the at least one seed;
- generate (230), on the fly, by using the at least one seed, the white-box data payload; and
- send (234), to the first device, through the second channel as a data payload request response, the white-box data payload.

10. A system (10) adapted to provision a first (12) or a second device with white-box assets, the white-box assets including a white-box key and associated white-box data, the system comprising at least the first device, a first server (110) and at least one second server (120), the first device is configured to send (210), to the first server, through a first channel, a key payload request for getting a key payload relating to a white-box key;
the first server is configured to:
- retrieve (212) the white-box key payload and a unique identifier, the unique identifier being associated with a corresponding data payload relating to the white-box data;
- send (214), to the first device, through the first channel, as a key payload request response, the unique identifier and the white-box key payload;
the first device is configured to:
- store (216) or let store, by the second device, the unique identifier and the white-box key payload, the second device being connected or coupled to the first device,
- send (220), to a second server, through a second channel, a data payload request for getting the data payload relating to the white-box data, the data payload request including or being accompanied with the unique identifier;
the second server is configured to send (222), to the first server, a seed request for getting at least one seed, the seed request including or being accompanied with the unique identifier;
the first server is configured to:
- retrieve (226), based on the unique identifier, the at least one seed;
- send (228), to the second server, as a seed request response, the at least one seed;
the second server is configured to:
- generate (230), on the fly, by using the at least one seed, the white-box data payload; and
- send (234), to the first device, through the second channel, as a data payload request response, the white-box data payload; and
the first device is configured to store (236) or let store, by the second device as per the white-box key payload, the white-box data payload.

## Patentansprüche

1. Verfahren (20) zum Bereitstellen von White-Box-Assets einer ersten (12) oder einer zweiten Vorrichtung, wobei die White-Box-Assets einen White-Box-Schlüssel und verknüpfte White-Box-Daten einschließen, das Verfahren umfassend:
- a) Senden (210), durch die erste Vorrichtung, an einen ersten Server, über einen ersten Kanal, einer Schlüsselnutzlastanforderung zum Erhalten einer Schlüsselnutzlast, die sich auf den White-Box-Schlüssel bezieht;
- b) Abrufen (212), durch den ersten Server (110), der White-Box-Schlüsselnutzlast und einer eindeutigen Kennung, wobei die eindeutige Kennung mit einer entsprechenden Datennutzlast verknüpft ist, die sich auf die White-Box-Daten bezieht;
- c) Senden (214), durch den ersten Server, an die erste Vorrichtung, über den ersten Kanal, als eine Antwort auf eine Schlüsselnutzlastanforderung, der eindeutigen Kennung und der White-Box-Schlüsselnutzlast;
- d) Speichern (216), durch die erste oder die zweite Vorrichtung, der eindeutigen Kennung und der White-Box-Schlüsselnutzlast, wobei die zweite Vorrichtung mit der ersten Vorrichtung gekoppelt oder verbunden ist;
- e) Senden (220), durch die erste Vorrichtung, an einen zweiten Server (120), über einen zweiten Kanal, einer Datennutzlastanforderung zum Erhalten der Datennutzlast, die sich auf die White-Box-Daten bezieht,
die White-Box-Datennutzlast mit der White-Box-Schlüsselnutzlast verknüpft ist, wobei die White-Box-Datennutzlastanforderung die eindeutige Kennung einschließt oder von dieser begleitet wird;
- f) Senden (222), durch den zweiten Server, an den ersten Server, einer Seed-Anforderung zum Erhalten von mindestens einer Seed, wobei die Seed-Anforderung die eindeutige Kennung einschließt oder von dieser begleitet wird;
- g) Abrufen (226), durch den ersten Server, basierend auf der eindeutigen Kennung, der mindestens einen Seed;
- h) Senden (228), durch den ersten Server, an den zweiten Server, als eine Antwort auf eine Seed-Anforderung, der mindestens einen Seed;
- i) spontanes Generieren (230), durch den zweiten Server, durch Verwenden der mindestens einen Seed, der White-Box-Datennutzlast;
- j) Senden (234),
durch den zweiten Server, an die erste Vorrichtung, über den zweiten Kanal, als eine Antwort auf eine Datennutzlastanforderung, der White-Box-Datennutzlast; und
- k) Speichern (236), durch die selbe Vorrichtung wie in Schritt d), der White-Box-Datennutzlast.

2. Verfahren nach Anspruch 1, wobei der erste Server und die Vorrichtung, vor dem Senden der eindeutigen Kennung und der White-Box-Schlüsselnutzlast, beide einen zuvor bestimmten Bereitstellungsschlüssel speichern, das Verfahren ferner umfasst:
- Verschlüsseln, durch den ersten Server, durch Verwenden des Bereitstellungsschlüssels, der eindeutigen Kennung und der White-Box-Schlüsselnutzlast; und
- Entschlüsseln, durch die erste oder die zweite Vorrichtung, durch Verwenden des Bereitstellungsschlüssels, der verschlüsselten eindeutigen Kennung und der verschlüsselten White-Box-Schlüsselnutzlast.

3. Verfahren nach Anspruch 1 oder 2, wobei, um, durch den ersten Server, die mindestens eine Seed abzurufen, die mindestens eine Seed, durch den ersten Server, auf eine verschlüsselte Weise gespeichert wird, das Verfahren ferner einschließt:
- Senden, durch den ersten Server, an einen dritten Server (130), einer Anforderung zum Entschlüsseln der mindestens einen verschlüsselten Seed;
- Entschlüsseln, durch den dritten Server, der mindestens einen verschlüsselten Seed durch Verwenden eines zuvor bestimmten Datenschutzschlüssels; und
- Senden, durch den dritten Server, an den ersten Server, der mindestens einen Seed.

4. Verfahren nach einem der vorstehenden Ansprüche, wobei, vor dem Senden, durch den ersten Server, an die erste Vorrichtung, über den ersten Kanal, der eindeutigen Kennung und der White-Box-Schlüsselnutzlast, wobei die eindeutige Kennung und die White-Box-Schlüsselnutzlast, durch den ersten Server, beide auf eine verschlüsselte Weise gespeichert werden, das Verfahren ferner einschließt:
- Senden, durch den ersten Server, an einen dritten Server (130), einer Anforderung zum Entschlüsseln der verschlüsselten eindeutigen Kennung und der verschlüsselten White-Box-Schlüsselnutzlast;
- Entschlüsseln, durch den dritten Server, der verschlüsselten eindeutigen Kennung und der verschlüsselten White-Box-Schlüsselnutzlast durch Verwenden eines zuvor bestimmten Datenschutzschlüssels; und
- Senden, durch den dritten Server, an den ersten Server, der eindeutigen Kennung und der White-Box-Schlüsselnutzlast.

5. Verfahren nach einem der vorstehenden Ansprüche, wobei, zusätzlich zu dem Senden, durch die erste Vorrichtung, an den ersten Server, über den ersten Kanal, der Schlüsselnutzlastanforderung, wobei der erste Server auf einen zuvor bestimmten Referenzregistrierungscode zugreift, das Verfahren ferner umfasst:
- zur Verfügung stellen, durch einen Benutzer, eines Registrierungscodes der ersten oder der zweiten Vorrichtung;
- Senden, durch die erste Vorrichtung, an den ersten Server, über den ersten Kanal, der Schlüsselnutzlastanforderung, wobei die Schlüsselnutzlastanforderung den Registrierungscode einschließt oder von diesem begleitet wird;
- Überprüfen, durch den ersten Server, ob der empfangene Registrierungscode mit dem zuvor bestimmten Referenzregistrierungscode übereinstimmt oder nicht; und
- Abrufen, durch den ersten Server nur, falls der empfangene Registrierungscode mit dem zuvor bestimmten Referenzregistrierungscode, der White-Box-Schlüsselnutzlast und der eindeutigen Kennung übereinstimmt.

6. Verfahren nach Anspruch 5, wobei das Verfahren ferner umfasst:
- Senden, durch den ersten Server oder einen dritten Server (130), an den Benutzer, über einen Außerbandkanal, des Registrierungscodes.

7. Verfahren nach Anspruch 5, wobei das Verfahren ferner umfasst:
- Senden, durch den ersten Server oder einen dritten Server (130), an die erste oder die zweite Vorrichtung, über einen dritten Kanal, des Registrierungscodes und eines Skripts, das den Benutzer anfordert, sich zunächst gegenüber der ersten oder der zweiten Vorrichtung zu authentifizieren, um auf den Registrierungscode zuzugreifen;
- Auffordern, durch die erste oder die zweite Vorrichtung, des Benutzers, Benutzerauthentifizierungsdaten zu übermitteln;
- Übermitteln, durch den Benutzer, von Benutzerauthentifizierungsdaten an die erste oder die zweite Vorrichtung;
- Verifizieren, durch die erste oder die zweite Vorrichtung, ob die übermittelten Benutzerauthentifizierungsdaten mit den zuvor bestimmten Referenzbenutzerauthentifizierungsdaten übereinstimmen oder nicht;
- Abrufen, durch die erste oder die zweite Vorrichtung nur dann, falls die übermittelten Benutzerauthentifizierungsdaten mit den Referenzbenutzerauthentifizierungsdaten übereinstimmen, des Registrierungscodes.

8. Erste Vorrichtung (12), die geeignet ist, um White-Box-Assets bereitgestellt zu werden, wobei die White-Box-Assets einen White-Box-Schlüssel und verknüpfte White-Box-Daten einschließen, wobei die erste Vorrichtung konfiguriert ist zum:
- Senden (210), an einen ersten Server (110), über einen ersten Kanal, einer Schlüsselnutzlastanforderung zum Erhalten einer Schlüsselnutzlast, die sich auf einen White-Box-Schlüssel bezieht;
- Empfangen (214), von dem ersten Server, über den ersten Kanal, als eine Antwort auf eine Schlüsselnutzlastanforderung, einer eindeutigen Kennung und der White-Box-Schlüsselnutzlast;
- Speichern (216) der eindeutigen Kennung und der White-Box-Schlüsselnutzlast;
- Senden (220), an einen zweiten Server (120), über einen zweiten Kanal, einer Datennutzlastanforderung zum Erhalten einer Datennutzlast, die sich auf die White-Box-Daten bezieht, wobei die Datennutzlastanforderung die eindeutige Kennung einschließt oder von dieser begleitet wird;
- Empfangen (232), von dem zweiten Server, über den zweiten Kanal, als eine Antwort auf eine Datennutzlastanforderung, der White-Box-Datennutzlast; und
- Speichern (236) der White-Box-Datennutzlast.

9. Zweiter Server (120), der geeignet ist, um eine erste oder eine zweite Vorrichtung mit einem Teil von White-Box-Assets auszustatten, wobei die White-Box-Assets einen White-Box-Schlüssel und verknüpfte White-Box-Daten einschließen, wobei der zweite Server konfiguriert ist zum:
- Empfangen (220), von der ersten Vorrichtung, über einen zweiten Kanal, einer Datennutzlastanforderung zum Erhalten einer Datennutzlast, die sich auf die White-Box-Daten bezieht, wobei die White-Box-Datennutzlast mit einer Schlüsselnutzlastanforderung verknüpft ist, die sich auf den White-Box-Schlüssel bezieht und eine eindeutige Kennung einschließt oder von dieser begleitet wird;
- Senden (222), an einen ersten Server, einer Seed-Anforderung zum Erhalten von mindestens einer Seed, wobei die Seed-Anforderung die eindeutige Kennung einschließt oder von dieser begleitet wird;
- Empfangen (228), von dem ersten Server, als eine Antwort auf eine Seed-Anforderung, der mindestens einen Seed;
- spontanes Generieren (230), durch Verwenden der mindestens einen Seed, der White-Box-Datennutzlast; und
- Senden (234), an die erste Vorrichtung, über den zweiten Kanal als eine Antwort auf eine Datennutzlastanforderung, der White-Box-Datennutzlast.

10. System (10), das geeignet ist, eine erste (12) oder eine zweite Vorrichtung mit White-Box-Assets auszustatten, wobei die White-Box-Assets einen White-Box-Schlüssel und verknüpfte White-Box-Daten einschließen, das System umfassend mindestens die erste Vorrichtung, einen ersten Server (110) und mindestens einen zweiten Server (120), wobei die erste Vorrichtung konfiguriert ist, um, an den ersten Server, über einen ersten Kanal, eine Schlüsselnutzlastanforderung zum Erhalten einer Schlüsselnutzlast zu senden (210), die sich auf einen White-Box-Schlüssel bezieht;
wobei der erste Server konfiguriert ist zum:
- Abrufen (212) der White-Box-Schlüsselnutzlast und einer eindeutigen Kennung, wobei die eindeutige Kennung mit der entsprechenden Datennutzlast verknüpft ist, die sich auf die White-Box-Daten bezieht: -Senden (214), an die erste Vorrichtung, über den ersten Kanal, als eine Antwort auf eine Schlüsselnutzlastanforderung, der eindeutigen Kennung und der White-Box-Schlüsselnutzlast;
wobei die erste Vorrichtung konfiguriert ist zum:
- Speichern (216) oder Speichern lassen, durch die zweite Vorrichtung, der eindeutigen Kennung und der White-Box-Schlüsselnutzlast, wobei die zweite Vorrichtung mit der ersten Vorrichtung verbunden oder gekoppelt ist;
- Senden (220), an einen zweiten Server, über einen zweiten Kanal, einer Datennutzlastanforderung zum Erhalten der Datennutzlast, die sich auf die White-Box-Daten bezieht, wobei die Datennutzlastanforderung die eindeutige Kennung einschließt oder von dieser begleitet wird;
der zweite Server konfiguriert ist, um, an den ersten Server, eine Seed-Anforderung zum Erhalten von mindestens einer Seed zu senden (222), wobei die Seed-Anforderung die eindeutige Kennung einschließt oder von dieser begleitet wird;
wobei der erste Server konfiguriert ist zum:
- Abrufen (226), basierend auf der eindeutigen Kennung, der mindestens einen Seed;
- Senden (228), an den zweiten Server, als eine Antwort auf eine Seed-Anforderung, der mindestens einen Seed;
wobei der zweite Server konfiguriert ist zum:
- spontanes Generieren (230), durch Verwenden der mindestens einen Seed, der White-Box-Datennutzlast; und
- Senden (234), an die erste Vorrichtung, über den zweiten Kanal, als eine Antwort auf eine Datennutzlastanforderung, der White-Box-Datennutzlast; und
die erste Vorrichtung konfiguriert ist, um, durch die zweite Vorrichtung gemäß der White-Box-Schlüsselnutzlast, die White-Box-Datennutzlast zu speichern (236) oder speichern zu lassen.

## Revendications

1. Procédé (20) destiné au provisionnement d'un premier (12) ou d'un second dispositif avec des éléments en boîte blanche, les éléments en boîte blanche comportant une clé en boîte blanche et des données en boîte blanche associées, le procédé comprenant :
- a) l'envoi (210), par le premier dispositif, à un premier serveur, par le biais d'un premier canal, d'une demande de charge utile de clé destinée à obtenir une charge utile de clé se rapportant à la clé en boîte blanche ;
- b) la récupération (212), par le premier serveur (110), de la charge utile de clé en boîte blanche et d'un identificateur unique, l'identificateur unique étant associé à une charge utile de données correspondante se rapportant aux données en boîte blanche ;
- c) l'envoi (214), par le premier serveur, au premier dispositif, par le biais du premier canal, en tant que réponse à la demande de charge utile de clé, de l'identificateur unique et de la charge utile de clé en boîte blanche ;
- d) le stockage (216), par le premier ou le second dispositif, de l'identificateur unique et de la charge utile de clé en boîte blanche, le second dispositif étant couplé ou connecté au premier dispositif ;
- e) l'envoi (220), par le premier dispositif, à un deuxième serveur (120), par le biais d'un deuxième canal, d'une demande de charge utile de données destinée à obtenir la charge utile de données se rapportant aux données en boîte blanche, la charge utile de données en boîte blanche étant associée à la charge utile de clé en boîte blanche, la demande de charge utile de données en boîte blanche comportant ou étant accompagnée de l'identificateur unique ;
- f) l'envoi (222), par le deuxième serveur, au premier serveur, d'une demande de graine destinée à obtenir au moins une graine, la demande de graine comportant ou étant accompagnée de l'identificateur unique ;
- g) la récupération (226), par le premier serveur, en fonction de l'identificateur unique, de l'au moins une graine ;
- h) l'envoi (228), par le premier serveur, au deuxième serveur, en tant que réponse à la demande de graine, de l'au moins une graine ;
- i) la génération (230), par le deuxième serveur, au vol, en utilisant l'au moins une graine, de la charge utile de données en boîte blanche ;
- j) l'envoi (234), par le deuxième serveur, au premier dispositif, par le biais du deuxième canal, en tant que réponse à la demande de charge utile de données, de la charge utile de données en boîte blanche ; et
- k) le stockage (236), par le même dispositif qu'à l'étape d), de la charge utile de données en boîte blanche.

2. Procédé selon la revendication 1, dans lequel, le premier serveur et le dispositif stockant à la fois une clé de provisionnement prédéterminée, avant envoi de l'identificateur unique et la charge utile de clé en boîte blanche, le procédé comprend en outre :
- le cryptage, par le premier serveur, en utilisant la clé de provisionnement, de l'identificateur unique et de la charge utile de clé en boîte blanche ; et
- le décryptage, par le premier ou second dispositif, en utilisant la clé de provisionnement, de l'identificateur unique crypté et de la charge utile de clé en boîte blanche cryptée.

3. Procédé selon la revendication 1 ou 2, dans lequel, pour récupérer, par le premier serveur, l'au moins une graine, l'au moins une graine étant stockée, par le premier serveur, d'une manière cryptée, le procédé comporte en outre :
- l'envoi, par le premier serveur, à un troisième serveur (130), d'une demande de décryptage de l'au moins une graine cryptée ;
- le décryptage, par le troisième serveur, de l'au moins une graine cryptée en utilisant une clé de protection de données prédéterminée ; et
- l'envoi, par le troisième serveur, au premier serveur, de l'au moins une graine.

4. Procédé selon l'une quelconque revendication précédente, dans lequel, avant envoi, par le premier serveur, au premier dispositif, par le biais du premier canal, de l'identificateur unique et de la charge utile de clé en boîte blanche, l'identificateur unique et la charge utile de clé en boîte blanche étant l'un et l'autre stockés, par le premier serveur, d'une manière cryptée, le procédé comporte en outre :
- l'envoi, par le premier serveur, à un troisième serveur (130), d'une demande pour le décryptage de l'identificateur unique crypté et de la charge utile de clé en boîte blanche cryptée ;
- le décryptage, par le troisième serveur, de l'identificateur unique crypté et de la charge utile de clé en boîte blanche cryptée en utilisant une clé de protection de données prédéterminée ; et
- l'envoi, par le troisième serveur, au premier serveur, de l'identificateur unique et de la charge utile de clé en boîte blanche.

5. Procédé selon l'une quelconque revendication précédente, dans lequel, en plus de l'envoi, par le premier dispositif, au premier serveur, par le biais du premier canal, de la demande de charge utile de clé, le premier serveur accédant à un code d'enregistrement de référence prédéterminé, le procédé comprend en outre :
- la fourniture, par un utilisateur, au premier ou second dispositif, d'un code d'enregistrement ;
- l'envoi, par le premier dispositif, au premier serveur, par le biais du premier canal, de la demande de charge utile de clé, la demande de charge utile de clé comportant ou étant accompagnée du code d'enregistrement ;
- le fait de vérifier, par le premier serveur, si le code d'enregistrement reçu concorde ou non avec le code d'enregistrement de référence prédéterminé ; et
- la récupération, par le premier serveur, uniquement si le code d'enregistrement reçu concorde avec le code d'enregistrement de référence prédéterminé, de la charge utile de clé en boîte blanche et de l'identificateur unique.

6. Procédé selon la revendication 5, dans lequel le procédé comprend en outre :
- l'envoi, par le premier serveur ou un troisième serveur (130), à l'utilisateur, par le biais d'un canal hors bande, du code d'enregistrement.

7. Procédé selon la revendication 5, dans lequel le procédé comprend en outre :
- l'envoi, par le premier serveur ou un troisième serveur (130), au premier ou second dispositif, par le biais d'un troisième canal, du code d'enregistrement et d'un script qui demande à l'utilisateur de s'authentifier d'abord sur le premier ou second dispositif pour accéder au code d'enregistrement ;
- l'invitation, par le premier ou second dispositif, de l'utilisateur à présenter des données d'authentification d'utilisateur ;
- la présentation, par l'utilisateur, au premier ou second dispositif, de données d'authentification d'utilisateur ;
- le fait de vérifier, par le premier ou second dispositif, si les données d'authentification d'utilisateur présentées concordent ou non avec des données d'authentification d'utilisateur de référence prédéterminées ;
- la récupération, par le premier ou second dispositif, uniquement si les données d'authentification d'utilisateur présentées concordent avec les données d'authentification d'utilisateur de référence, du code d'enregistrement.

8. Premier dispositif (12) conçu pour être provisionné avec des éléments en boîte blanche, les éléments en boîte blanche comportant une clé en boîte blanche et des données en boîte blanche associées, le premier dispositif est configuré pour :
- envoyer (210), à un premier serveur (110), par le biais d'un premier canal, une demande de charge utile de clé destinée à obtenir une charge utile de clé se rapportant à une clé en boîte blanche ;
- recevoir (214), en provenance du premier serveur, par le biais du premier canal, en tant que réponse à la demande de charge utile de clé, un identificateur unique et la charge utile de clé en boîte blanche ;
- stocker (216) l'identificateur unique et la charge utile de clé en boîte blanche ;
- envoyer (220), à un deuxième serveur (120), par le biais d'un deuxième canal, une demande de charge utile de données destinée à obtenir une charge utile de données se rapportant aux données en boîte blanche, la demande de charge utile de données comportant ou étant accompagnée de l'identificateur unique ;
- recevoir (232), en provenance du deuxième serveur, par le biais du deuxième canal, en tant que réponse à la demande de charge utile de données, la charge utile de données en boîte blanche ; et
- stocker (236) la charge utile de données en boîte blanche.

9. Deuxième serveur (120) conçu pour provisionner un premier ou un second dispositif avec une partie d'éléments en boîte blanche, les éléments en boîte blanche comportant une clé en boîte blanche et des données en boîte blanche associées, le deuxième serveur est configuré pour :
- recevoir (220), en provenance du premier dispositif, par le biais d'un deuxième canal, une demande de charge utile de données destinée à obtenir une charge utile de données se rapportant aux données en boîte blanche, la charge utile de données en boîte blanche étant associée à une charge utile de clé se rapportant à la clé en boîte blanche, la demande de charge utile de données comportant ou étant accompagnée d'un identificateur unique ;
- envoyer (222), à un premier serveur, une demande de graine destinée à obtenir au moins une graine, la demande de graine comportant ou étant accompagnée de l'identificateur unique ;
- recevoir (228), en provenance du premier serveur, en tant que réponse à la demande de graine, l'au moins une graine ;
- générer (230), au vol, en utilisant l'au moins une graine, la charge utile de données en boîte blanche ; et
- envoyer (234), au premier dispositif, par le biais du deuxième canal en tant que réponse à la demande de charge utile de données, la charge utile de données en boîte blanche.

10. Système (10) conçu pour provisionner un premier (12) ou un second dispositif avec des éléments en boîte blanche, les éléments en boîte blanche comportant une clé en boîte blanche et des données en boîte blanche associées, le système comprenant au moins le premier dispositif, un premier serveur (110) et au moins un deuxième serveur (120), le premier dispositif est configuré pour envoyer (210), au premier serveur, par le biais d'un premier canal, une demande de charge utile de clé destinée à obtenir une charge utile de clé se rapportant à une clé en boîte blanche ;
le premier serveur est configuré pour :
- récupérer (212) la charge utile de clé en boîte blanche et un identificateur unique, l'identificateur unique étant associé à une charge utile de données correspondante se rapportant aux données en boîte blanche :
- envoyer (214), au premier dispositif, par le biais du premier canal, en tant que réponse à la demande de charge utile de clé, l'identificateur unique et la charge utile de clé en boîte blanche ;
le premier dispositif est configuré pour :
- stocker (216) ou laisser stocker, par le second dispositif, l'identificateur unique et la charge utile de clé en boîte blanche, le second dispositif étant connecté ou couplé au premier dispositif ;
- envoyer (220), à un deuxième serveur, par le biais d'un deuxième canal, une demande de charge utile de données destinée à obtenir la charge utile de données se rapportant aux données en boîte blanche, la demande de charge utile de données comportant ou étant accompagnée de l'identificateur unique ;
le deuxième serveur est configuré pour envoyer (222), au premier serveur, une demande de graine destinée à obtenir au moins une graine, la demande de graine comportant ou étant accompagnée de l'identificateur unique ;
le premier serveur est configuré pour :
- récupérer (226), en fonction de l'identificateur unique, l'au moins une graine ;
- envoyer (228), au deuxième serveur, en tant que réponse à la demande de graine, l'au moins une graine ;
le deuxième serveur est configuré pour :
- générer (230), au vol, en utilisant l'au moins une graine, la charge utile de données en boîte blanche ; et
- envoyer (234), au premier dispositif, par le biais du deuxième canal en tant que réponse à la demande de charge utile de données, la charge utile de données en boîte blanche ; et
le premier dispositif est configuré pour stocker (236) ou laisser stocker, par le second dispositif conformément à la charge utile de clé en boîte blanche, la charge utile de données en boîte blanche.
